# EUROPÄISCHE PATENTSCHRIFT

(11) **EP 3 357 739 B1**
(45) Veröffentlichungstag und Bekanntmachung des Hinweises auf die Patenterteilung: **10.05.2023**
(21) Anmeldenummer: 18154079.0
(22) Anmeldetag: 30.01.2018
(51) Int. Cl.: B60L 53/14, B60M 7/00, B60L 5/42, B60L 53/30

(54) **VORRICHTUNG ZUM AUFLADEN EINES ELEKTRISCHEN ENERGIESPEICHERS EINES EINEN ELEKTRISCHEN ANTRIEB AUFWEISENDEN FAHRZEUGS**
DEVICE FOR CHARGING AN ELECTRICAL ENERGY STORAGE DEVICE OF A VEHICLE WITH AN ELECTRICAL DRIVE
DISPOSITIF DE CHARGEMENT D'UN ACCUMULATEUR D'ÉNERGIE ÉLECTRIQUE D'UN VÉHICULE COMPORTANT UN ENTRAÎNEMENT ÉLECTRIQUE

(30) Priorität: 02.02.2017 DE 102017000916
(43) Veröffentlichungstag der Anmeldung: 08.08.2018
(73) Patentinhaber: MAN Truck & Bus SE, 80995 München (DE)
(72) Erfinder: Antwerpen, Korbinian, D/85716 Unterschleissheim (DE)
(74) Vertreter: Liebl, Thomas

(56) Entgegenhaltungen:
- EP-A1- 3 115 248
- WO-A1-2015/173036
- CN-A- 101 580 022
- CN-U- 204 383 201
- DE-A1-102014 213 831
- DE-A1-102014 226 357
- GB-A- 2 518 129
- US-A1- 2016 185 239

## Beschreibung

Die Erfindung betrifft eine Vorrichtung zum Aufladen eines elektrischen Energiespeichers, insbesondere einer Traktionsbatterie, nach Patentanspruch 1, ein Fahrzeug mit der Vorrichtung nach Patentanspruch 10 sowie ein Verfahren zum Aufladen eines elektrischen Energiespeichers, insbesondere einer Traktionsbatterie, nach Patentanspruch 11.

Es sind Fahrzeuge, insbesondere Omnibusse, mit einem elektrischen Antrieb bekannt, deren elektrischer Energiespeicher bzw. deren Traktionsbatterie an ortsfesten Ladestationen mit elektrischer Energie aufgeladen werden kann. Derartige Fahrzeuge können beispielsweise über einen rein elektrischen Antrieb oder aber auch über einen Hybridantrieb mit Elektromotor und Verbrennungsmotor verfügen. Das Fahrzeug weist dabei üblicherweise mehrere elektrische Kontakte auf, die zum Aufladen des fahrzeugseitigen Energiespeichers in Anlage bzw. in Kontakt mit elektrischen Gegenkontakten der jeweiligen Ladestation gebracht werden. Konkret weist das Fahrzeug üblicherweise einen, einen ersten Pol, beispielsweise einen Pluspol, bildenden ersten Leistungskontakt, einen, einen zweiten Pol, beispielsweise einen Minuspol, bildenden zweiten Leistungskontakt, einen Steuerkontakt und einen Potentialausgleichskontakt bzw. Erdungskontakt auf. Korrespondierend dazu weist die Ladestation einen ersten Leistungs-Gegenkontakt, einen zweiten Leistungs-Gegenkontakt, einen Steuer-Gegenkontakt und einen Potentialausgleichs-Gegenkontakt auf.

Zur Herstellung des Kontakts zwischen den fahrzeugseitigen Kontakten und den ladestationsseitigen Gegenkontakten ist es beispielsweise bekannt, ein die Gegenkontakte aufweisendes Gegenkontaktelement der Ladestation vertikal nach oben anzuheben, wenn die fahrzeugseitigen Kontakte starr bzw. unbeweglich im Unterbodenbereich des Fahrzeugs festgelegt sind. Für den Fall, dass die fahrzeugseitigen Kontakte unbeweglich im Dachbereich des Fahrzeugs festgelegt sind, kann zur Herstellung des Kontakts ein die Gegenkontakte aufweisendes Gegenkontaktelement der Ladestation abgesenkt bzw. vertikal nach unten verlagert werden. Ebenso ist es beispielsweise bekannt, ein die fahrzeugseitigen Kontakte aufweisendes, im Dachbereich des Fahrzeugs angeordnetes Kontaktelement des Fahrzeugs vertikal nach oben anzuheben, wenn die ladestationsseitigen Kontakte unbeweglich an der Ladestation festgelegt sind.

Die fahrzeugseitigen Kontakte und die ladestationsseitigen Gegenkontakte kommen dabei immer gleichzeitig miteinander in Anlage. Zudem kommen auch bei einem Lösen bzw. Unterbrechen der Kontakte durch Verlagerung des ladestationsseitigen Gegenkontaktelements bzw. des fahrzeugseitigen Kontaktelements in entgegengesetzter Richtung die fahrzeugseitigen Kontakte und die ladestationsseitigen Gegenkontakte immer gleichzeitig außer Anlage. Des Weiteren kommen bei den bekannten Systemen bzw. Vorrichtungen auch bei einem Lösen der Kontakte durch unbeabsichtigtes Wegrollen des Fahrzeugs ausgehend von einer Fahrzeug-Ladeposition vorwärts oder rückwärts die fahrzeugseitigen Kontakte und die ladestationsseitigen Gegenkontakte immer gleichzeitig außer Anlage.

Im Bereich der Anlagentechnik gibt es die Forderung (DIN VDE 0100), dass der Stromfluss bzw. Signalfluss zwischen elektrischen Komponenten in einer bestimmten Reihenfolge ermöglicht bzw. hergestellt und abgestellt bzw. unterbrochen werden soll. So soll zunächst der Stromfluss über die korrespondierenden Potentialausgleichskontakte ermöglicht, anschließend der Stromfluss über die korrespondierenden Leistungskontakte ermöglicht und schließlich der Signalfluss über die korrespondierenden Steuerkontakte hergestellt werden. Zudem soll zunächst der Signalfluss über die korrespondierenden Steuerkontakte abgstellt, anschließend der Stromfluss über die korrespondierenden Leistungskontakte unterbrochen und schließlich der Stromfluss über die korrespondierenden Potentialausgleichskontakte unterbrochen werden.

Aus der EP 3 115 248 A1 ist eine Vorrichtung zum Aufladen eines Energiespeichers mit einer fahrzeugseitigen Kontakteinrichtung bekannt. Die fahrzeugseitige Kontakteinrichtung ist mittels eines Arms in Richtung einer ladestationsseitigen Kontakteinrichtung verlagerbar. Die fahrzeugseitige Kontakteinrichtung hat zwei parallel zueinander ausgerichtete Schienen mit jeweils zwei Kontakten und die ladestationsseitige Kontakteinrichtung hat ebenfalls zwei parallel zueinander ausgerichtete Schienen mit jeweils zwei Kontakten.

Aufgabe der Erfindung ist es, eine Vorrichtung und ein Verfahren zum Aufladen eines elektrischen Energiespeichers, insbesondere einer Traktionsbatterie, eines einen elektrischen Antrieb aufweisenden Fahrzeugs bereitzustellen, mittels denen zuverlässig und effektiv sichergestellt wird, dass der Stromfluss bzw. Signalfluss zwischen den fahrzeugseitigen Kontakten und den ladestationsseitigen Gegenkontakten normgerecht bzw. gemäß DIN VDE 0100 hergestellt bzw. abgestellt wird.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird eine Vorrichtung zum Aufladen eines elektrischen Energiespeichers, insbesondere einer Traktionsbatterie, eines einen elektrischen Antrieb aufweisenden Fahrzeugs vorgeschlagen, mit einer dem Fahrzeug zugeordneten elektrischen Kontakteinrichtung, die einen, einen ersten Pol bildenden ersten Leistungskontakt, einen, einen zweiten Pol bildenden zweiten Leistungskontakt, einen Steuerkontakt und einen Potentialausgleichskontakt aufweist, und mit einer, einer Ladestation zugeordneten Gegenkontakteinrichtung, die zu den fahrzeugseitigen Kontakten korrespondierende Gegenkontakte aufweist. Erfindungsgemäß sind die fahrzeugseitige Kontakteinrichtung und die ladestationsseitige Gegenkontakteinrichtung derart ausgebildet, dass zum Herstellen des Kontakts zwischen den fahrzeugseitigen Kontakten und den ladestationsseitigen Gegenkontakten zuerst der fahrzeugseitige Potentialausgleichskontakt in Anlage mit einem ladestationsseitigen Potentialausgleichs-Gegenkontakt bringbar ist, anschließend die fahrzeugseitigen Leistungskontakte in Anlage mit ladestationsseitigen Leistungs-Gegenkontakten bringbar sind und schließlich der fahrzeugseitige Steuerkontakt in Anlage mit einem ladestationsseitigen Steuer-Gegenkontakt bringbar ist. Zusätzlich sind die fahrzeugseitige Kontakteinrichtung und die ladestationsseitige Gegenkontakteinrichtung erfindungsgemäß auch derart ausgebildet, dass zum Lösen des Kontakts zwischen den fahrzeugseitigen Kontakten und den ladestationsseitigen Gegenkontakten zunächst der fahrzeugseitige Steuerkontakt außer Anlage mit dem ladestationsseitigen Steuer-Gegenkontakt bringbar ist, anschließend die fahrzeugseitigen Leistungskontakt außer Anlage mit den ladestationsseitigen Leistungs-Gegenkontakten bringbar sind und schließlich der fahrzeugseitige Potentialausgleichskontakt außer Anlage mit dem ladestationsseitigen Potentialausgleichs-Gegenkontakt bringbar ist.

Auf diese Weise kann effektiv sichergestellt werden, dass der Stromfluss bzw. Signalfluss zwischen den fahrzeugseitigen Kontakten und den ladestationsseitigen Gegenkontakten normgerecht bzw. gemäß DIN VDE 0100 hergestellt bzw. abgestellt wird, da nun bei einem Herstellen des Kontakts zwischen den fahrzeugseitigen Kontakten und den ladestationsseitigen Gegenkontakten zunächst die korrespondierenden Potentialausgleichskontakte, anschließend die korrespondierenden Leistungskontakte und schließlich die korrespondierenden Steuerkontakte miteinander in Anlage bzw. in Kontakt gebracht werden können. Zusätzlich werden bei einem Lösen des Kontakts zwischen den fahrzeugseitigen Kontakten und den ladestationsseitigen Gegenkontakten nun zunächst die korrespondierenden Steuerkontakte, anschließend die korrespondierenden Leistungskontakte und schließlich die korrespondierenden Potentialausgleichskontakte außer Anlage bzw. außer Kontakt gebracht.

In einer bevorzugten konkreten Ausgestaltung der erfindungsgemäßen Vorrichtung sind die fahrzeugseitigen Kontakte durch zwei, insbesondere stabförmige bzw. gerade und/oder in Fahrzeug-Längrichtung ausgerichtete, Kontaktschienen gebildet, um die fahrzeugseitige Kontakteinrichtung baulich einfach und funktionsoptimiert zu gestalten. Bevorzugt ist dabei vorgesehen, dass jeder Kontaktschiene zwei Kontakte zugeordnet sind, um den Aufbau derfahrzeugseitigen Kontakteinrichtung weiter zu vereinfachen.

Erfindungsgemäß weist die Ladestation zwei Gegenkontaktelemente mit jeweils zwei ladestationsseitigen Gegenkontakten auf, wobei diese Gegenkontaktelemente zum Herstellen des Kontakts zwischen den Kontakten des sich in der Ladeposition befindlichen Fahrzeugs und den ladestationsseitigen Gegenkontakten mittels einer ladestationsseitigen Verlagerungseinrichtung, insbesondere in Vertikalrichtung, in Richtung der fahrzeugseitigen Kontakte verlagerbar sind. So kann der Kontakt zwischen den fahrzeugseitigen Kontakten und den ladestationsseitigen Gegenkontakten einfach und zuverlässig wie gefordert hergestellt und gelöst werden. Die fahrzeugseitigen Kontakte können dabei beispielsweise im Dachbereich oder im Unterbodenbereich des Fahrzeugs angeordnet sein.

Zusätzlich kann das Fahrzeug zwei Kontaktelemente mit jeweils zwei fahrzeugseitigen Kontakten aufweist, wobei diese Kontaktelemente zum Herstellen des Kontakts zwischen den Kontakten des sich in der Ladeposition befindlichen Fahrzeugs und den ladestationsseitigen Gegenkontakten mittels einer fahrzeugseitigen Verlagerungseinrichtung, insbesondere in Vertikalrichtung, in Richtung der ladestationsseitigen Kontakte verlagerbar sind. Die fahrzeugseitigen Kontakte können hier ebenfalls im Dachbereich oder im Unterbodenbereich des Fahrzeugs angeordnet sein.

Erfindungsgemäß weist jedes Gegenkontaktelement der Ladestation ein, insbesondere stabförmiges, Schwenkelement und ein mit dem Schwenkelement über ein Schwenkgelenk schwenkbar verbundenes, insbesondere stabförmiges, Stützelement auf, wobei die zwei ladestationsseitigen Gegenkontakte des jeweiligen Gegenkontaktelements dem Schwenkelement des jeweiligen Gegenkontaktelements zugeordnet sind. So kann das Herstellen und Lösen des Kontakts zwischen den fahrzeugseitigen Kontakten und den ladestationsseitigen Gegenkontakten in der geforderten Reihenfolge einfach und effektiv realisiert werden. Bevorzugt ist das Schwenkelement des jeweiligen Gegenkontaktelements dabei um eine in Ladestation-Querrichtung ausgerichtete Querachse als Schwenkachse relativ zu dem Stützelement des jeweiligen Gegenkontaktelements verschwenkbar und/oder verdrehbar. Weiter bevorzugt ist das schienenförmige Schwenkelement des jeweiligen Gegenkontaktelements in Ladestation-Längsrichtung ausgerichtet.

Vorteilhaft ist jedem Gegenkontaktelement zudem wenigstens ein Spannelement, insbesondere ein Federelement, zugeordnet, das durch Verschwenkung des Gegenkontaktelements in eine erste Schwenkrichtung relativ zu dem Stützelement spannbar und durch Verschwenkung des Gegenkontaktelements in eine zweite, entgegengesetzte Schwenkrichtung relativ zu dem Stützkörper entspannbar ist. Mittels eines derartigen Spannelements wird das Herstellen des Kontakts zwischen den fahrzeugseitigen Kontakten und den ladestationsseitigen Gegenkontakten in der geforderten Reihenfolge zuverlässig sichergestellt.

Vorzugsweise sind die fahrzeugseitige Kontakteinrichtung und die ladestationsseitige Gegenkontakteinrichtung zudem derart ausgebildet, dass bei einer Verlagerung des jeweiligen ladestationsseitigen Gegenkontaktelements in Richtung des Fahrzeugs zunächst ein erster Gegenkontakt des Gegenkontaktelements in Anlage mit dem korresponierenden fahrzeugseitigen Kontakt kommt, anschließend das Gegenkontaktelement in die erste Schwenkrichtung relativ zu dem Stützelement verschwenkt wird und schließlich ein zweiter Gegenkontakt des Gegenkontaktelements in Anlage mit dem korresponierenden fahrzeugseitigen Kontakt kommt.

Weiter bevorzugt weist die Ladestation eine Höhenverstelleinrichtung als Verlagerungseinrichtung auf, mittels der die Gegenkontaktelemente relativ zu einem, insbesondere bodenseitig festgelegten, Basiskörper der Ladestation vertikal verlagerbar sind. Die Höhenverstelleinrichtung ist dabei vorzugsweise derart ausgebildet, dass die Gegenkontaktelemente mittels der Höhenverstelleinrichtung auch relativ zueinander vertikal verlagert bzw. angehoben und abgesenkt werden können. Alternativ wäre es aber auch denkbar, dass die Gegenkontaktelemente starr bzw. unbeweglich miteinander verbunden sind und nicht relativ zueinander vertikal verlagert werden können. Die Höhenverstelleinrichtung kann dabei beispielsweise durch einen Spindeltrieb oder durch einen Hebelmechanismus gebildet sein.

Vorteilhaft ist es weiter, wenn in einem Nicht-Kontaktzustand, in dem alle ladestationseitigen Kontakte außer Anlage mit den korrespondierenden fahrzeugseitigen Kontakten sind, die beiden Kontakte des jeweiligen Gegenkontaktelements in unterschiedlichen Höhenpositionen angeordnet sind. Bevorzugt ist dabei vorgesehen, dass in einem Kontaktzustand, in dem alle ladestationseitigen Kontakte in Anlage mit den korrespondierenden fahrzeugseitigen Kontakten sind, die beiden Kontakte des jeweiligen Gegenkontaktelements im Wesentlichen in gleicher Höhenposition angeordnet sind.

Weiter bevorzugt ist jeder ladestationsseitigen Gegenkontakt durch einen Gegenkontaktkörper, insbesondere durch eine Gegenkontaktschiene, gebildet, der vorzugsweise starr bzw. unbeweglich, mit dem Schwenkelement des jeweiligen Gegenkontaktelements verbunden ist.

Des Weiteren wird auch ein Fahrzeug, insbesondere ein Nutzfahrzeug, mit der erfindungsgemäßen Vorrichtung beansprucht. Die sich hieraus ergebenden Vorteile sind identisch mit den bereits gewürdigten Vorteilen der erfindungsgemäßen Vorrichtung, so dass diese an dieser Stelle nicht wiederholt werden.

Zur Lösung der bereits genannten Aufgabe wird ferner auch ein Verfahren zum Aufladen eines elektrischen Energiespeichers, insbesondere einer Traktionsbatterie, eines einen elektrischen Antrieb aufweisenden Fahrzeugs beansprucht, wobei wenigstens eine dem Fahrzeug zugeordnete elektrische Kontakteinrichtung vorgesehen ist, die einen, einen ersten Pol bildenden ersten Leistungskontakt, einen, einen zweiten Pol bildenden zweiten Leistungskontakt, einen Steuerkontakt und einen Potentialausgleichskontakt aufweist. Erfindungsgemäß ist vorgesehen, dass beim Herstellen eines Kontakts zwischen den fahrzeugseitigen Kontakten und zugeordneten ladestationsseitigen Gegenkontakten zunächst der fahrzeugseitige Potentialausgleichskontakt in Anlage mit einem ladestationsseitigen Potentialausgleich-Gegenkontakt gebracht wird, anschließend die fahrzeugseitigen Leistungskontakte in Anlage mit ladestationsseitigen Leistungs-Gegenkontakten gebracht werden und schließlich der fahrzeugseitige Steuerkontakt in Anlage mit einem ladestationsseitigen Steuer-Gegenkontakt gebracht wird. Zusätzlich ist erfindungsgemäß vorgesehen, dass beim Lösen eines Kontakts zwischen den fahrzeugseitigen Kontakten und zugeordneten ladestationsseitigen Gegenkontakten zunächst der fahrzeugseitige Steuerkontakt außer Anlage mit dem ladestationsseitigen Steuer-Gegenkontakt gebracht wird, anschließend die fahrzeugseitigen Leistungskontakte außer Anlage mit den ladestationsseitigen Leistungs-Gegenkontakten gebracht werden und schließlich der fahrzeugseitige Potentialausgleichskontakt außer Anlage mit dem ladestationsseitigen Potentialausgleichs-Gegenkontakt gebracht wird.

Die sich durch die erfindungsgemäße Verfahrensführung ergebenden Vorteile sind ebenfalls identisch mit den bereits gewürdigten Vorteilen der erfindungsgemäßen Vorrichtung, so dass diese an dieser Stelle ebenfalls nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: in einer ersten Seitenansicht ein erfindungsgemäßes Fahrzeug in einer definierten Ladeposition an einer erfindungsgemäßen Ladestation;
- Figur 2: in einer zweiten Seitenansicht das Fahrzeug an der Ladestation;
- Figur 3: eine Darstellung gemäß Figur 1 mit einem ersten ladestationsseitigen Gegenkontaktelement in einer unteren Höhenposition;
- Figur 4: eine Darstellung gemäß Figur 2 mit einem zweiten ladestationsseitigen Gegenkontaktelement in einer unteren Höhenposition; und
- Figur 5: in einer schematischen Darstellung von oben Kontaktelemente des in der Ladeposition befindlichen Fahrzeugs und ladestationsseitige Gegenkontaktschienen.

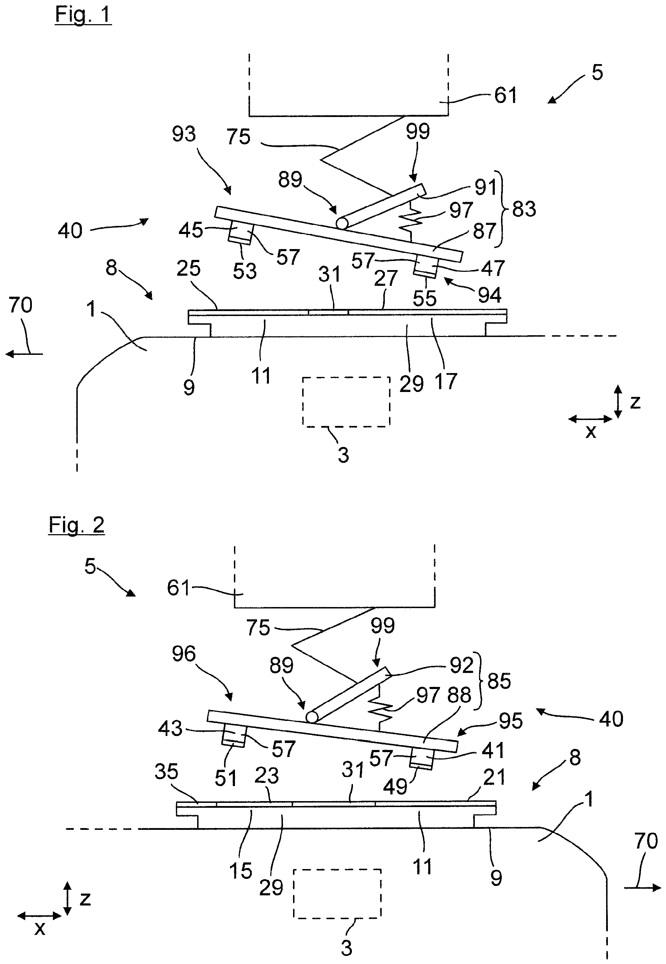

In Figur 1 ist ein Teil eines Fahrzeugs 1 in einer ersten Seitenansicht gezeigt. Das Fahrzeug 1 weist einen elektrischen Antrieb mit einem in Figur 1 schematisch angedeuteten elektrischen Energiespeicher 3, insbesondere einer Traktionsbatterie, auf und kann beispielsweise durch einen Omnibus oder durch einen Lastkraftwagen gebildet sein. Der elektrische Antrieb des Fahrzeugs 1 kann beispielsweise durch einen rein elektrischen Antrieb oder durch einen Hybridantrieb mit Elektromotor und Verbrennungsmotor gebildet sein. Bei der Darstellung gemäß Figur 1 befindet sich das Fahrzeug 1 in einer definierten Ladeposition, in der der elektrische Energiespeicher 3 des Fahrzeugs 1 mittels einer in Figur 1 teilweise gezeigten Ladestation 5 aufgeladen werden kann.

Die Ladestation 5 kann insgesamt beispielsweise im Wesentlichen I- oder L-förmig ausgebildet sein, wobei dann ein Endbereich der Ladestation starr bzw. unbeweglich am Boden befestigt ist und der andere Endbereich der Ladestation vom Boden beabstandet ist und den in Figur 1 gezeigten Aufbau aufweist.

Wie in Figur 1 weiter gezeigt ist, weist das Fahrzeug 1 hier beispielhaft im Dachbereich eine Kontakteinrichtung 8 mit einem starr bzw. unbeweglich an einem Fahrzeugdach 9 festgelegten Kontaktelement 11 auf.

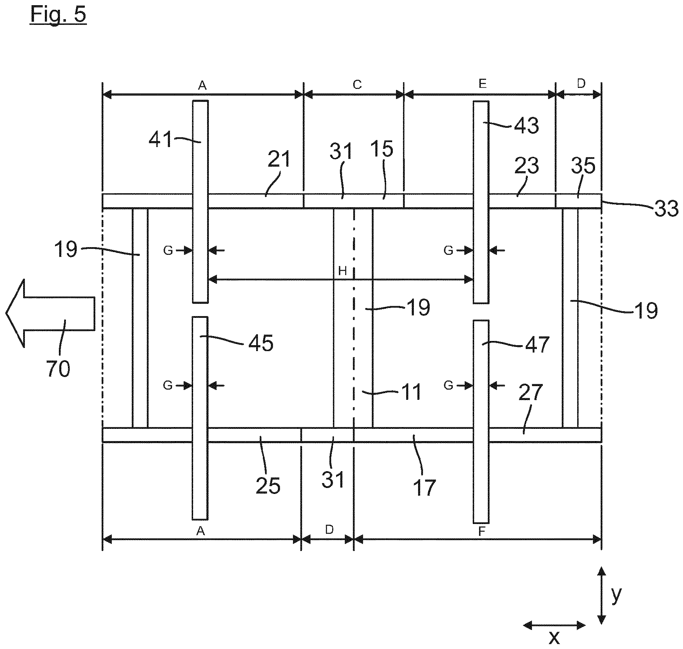

Wie aus der Ansicht von oben gemäß Figur 5 deutlicher hervorgeht, weist das fahrzeugseitige Kontaktelement 11 hier beispielhaft zwei im Wesentlichen stabförmige bzw. gerade in Fahrzeug-Längsrichtung x ausgerichtete sowie in Fahrzeug-Querrichtung y mit einem definierten Abstand voneinander beabstandete Kontaktschienen 15, 17 auf, die über mehrere Verbindungselemente 19 starr miteinander verbunden sind. Jeder Kontaktschiene 15, 17 sind hier zwei elektrische Kontakte zugeordnet. Die erste Kontaktschiene 15 weist hier beispielhaft einen, einen ersten Pol bildenden Leistungskontakt 21 und einen Steuerkontakt 23 auf. Die zweite Kontaktschiene 17 weist hier beispielhaft einen, einen zweiten Pol bildenden zweiten Leistungskontakt 25 und einen Potentialausgleichskontakt 27 auf.

Der erste Leistungskontakt 21 der in Fahrzeug-Längsrichtung x ausgerichteten ersten Kontaktschiene 15 ist hier dabei, in Fahrzeug-Längsrichtung x gesehen, vor dem Steuerkontakt 23 der ersten Kontaktschiene 15 angeordnet. Der zweite Leistungskontakt 25 der in Fahrzeug-Längsrichtung x ausgerichteten zweiten Kontaktschiene 17 ist hier, in Fahrzeug-Längsrichtung x gesehen, vor dem Potentialausgleichskontakt 27 der Kontaktschiene 17 angeordnet. Bei der in Figur 1 gezeigten ersten Seitenansicht des Fahrzeugs 1 ist hier nur die zweite Kontaktschiene 17 des fahrzeugseitigen Kontaktelements 11 ersichtlich. In Figur 2 ist das Fahrzeug 1 in einer zweiten Seitenansicht gezeigt, bei der die erste Kontaktschiene 15 des Fahrzeug 1 ersichtlich ist.

Wie aus Figur 1 und Figur 2 weiter hervorgeht, weist jede Kontaktschiene 15, 17 hier einen Trägerkörper 29 auf, an dem die jeweiligen Kontakte bzw. Kontaktteile festgelegt sind. Der Trägerkörper 29 ist hier aus einem elektrischen Isolationsmaterial gefertigt. Die beiden Kontakte der jeweiligen Kontaktschiene 15, 17 sind hier zudem, in Schienen-Längsrichtung bzw. in Fahrzeug-Längsrichtung x gesehen, jeweils mit einem definierten Längsabstand voneinander beabstandet. Zwischen den beiden Kontakte der jeweiligen Kontaktschiene 15, 17 ist ein elektrisches Isolationselement 31 aus einem elektrischen Isolationsmaterial angeordnet und, beispielsweise mittels einer Klebeverbindung, an dem Trägerkörper 29 festgelegt. Alternativ wäre es aber auch denkbar, dass das elektrische Isolationselement 31 und der Trägerkörper 29 materialeinheitlich und/oder einstückig miteinander verbunden sind bzw. einteilig gefertigt sind.

Gemäß Figur 2 ist hier zudem der Steuerkontakt 23 der ersten Kontaktschiene 15 von einer hinteren Stirnwand 33 der ersten Kontaktschiene 15 beabstandet. Zwischen dem Steuerkontakt 23 und der hinteren Stirnwand 33 der ersten Kontaktschiene 15 ist hier ebenfalls ein elektrisches Isolationselement 35 aus einem elektrischen Isolationsmaterial an dem Trägerkörper 29 der Kontaktschiene 15 festgelegt. Alternativ könnten auch das elektrische Isolationselement 35 und der Trägerkörper 29 materialeinheitlich und/oder einstückig miteinander verbunden sein.

Der erste Leistungskontakt 21, der Steuerkontakt 23 sowie die elektrischen Isolationselemente 31, 35 der ersten Kontaktschiene 15 sind hier zudem derart ausgebildet, dass eine, eine Anlagefläche bildende obere Wand 37 der ersten Kontaktschiene 15, mit der die erste Kontaktschiene 15 in Anlage mit der Ladestation 5 bringbar ist, durchgehend eben bzw. glatt, d.h. im Wesentlichen ohne Sprünge und Kanten, ausgebildet ist. Zudem sind der zweite Leistungskontakt 25, der Potentialausgleichskontakt 27 und das elektrische Isolationselement 31 der zweiten Kontaktschiene 17 hier ebenfalls derart ausgebildet, dass eine, eine Anlagefläche bildende obere Wand 39 der zweiten Kontaktschiene 17, mit der die zweite Kontaktschiene 17 in Anlage mit der Ladestation 5 gebracht werden kann, durchgehend eben bzw. glatt ist.

An dieser Stelle ist anzumerken, dass zur Vereinfachung der Darstellung in den Figuren die Fahrzeug-Längsrichtung x der Ladestation-Längsrichtung entspricht. Zudem entspricht in den Figuren auch die Fahrzeug-Querrichtung y der Ladestation-Querrichtung und die Fahrzeug-Hochrichtung z der Ladestation-Hochrichtung.

Wie weiter in Figur 5 gezeigt ist, weist die Ladestation 5 hier beispielhaft vier in Ladestation-Querrichtung y ausgerichtete Gegenkontaktschienen 41, 43, 45, 47 auf, die Bestandteil einer Gegenkontakteinrichtung 40 (Fig. 1) der Ladestation 5 sind. Die Gegenkontaktschiene 41 bildet hier dabei einen ersten Leistungs-Gegenkontakt 49 (Figur 2) aus, während die in Ladestation-Längsrichtung x gesehen, hinter der Gegenkontaktschiene 41 angeordnete Gegenkontaktschiene 43 einen Steuer-Gegenkontakt 51 (Figur 2) ausbildet. Die Gegenkontaktschiene 45 bildet einen zweiten Leistungs-Gegenkontakt 53 (Figur 1) aus, während die, in Ladestation-Längsrichtung x gesehen, hinter der Gegenkontaktschiene 45 angeordnete Gegenkontaktschiene 47 einen Potentialausgleich-Gegenkontakt 55 (Figur 1) ausbildet. Gemäß Fig. 1 und 2 weist jede Kontaktschiene 41, 43, 45, 47 hier zudem einen Trägerkörper 57 auf, an dem der jeweilige Gegenkontakt bzw. das jeweilige Gegenkontaktteil 49, 51, 53, 55 angebracht bzw. festgelegt ist.

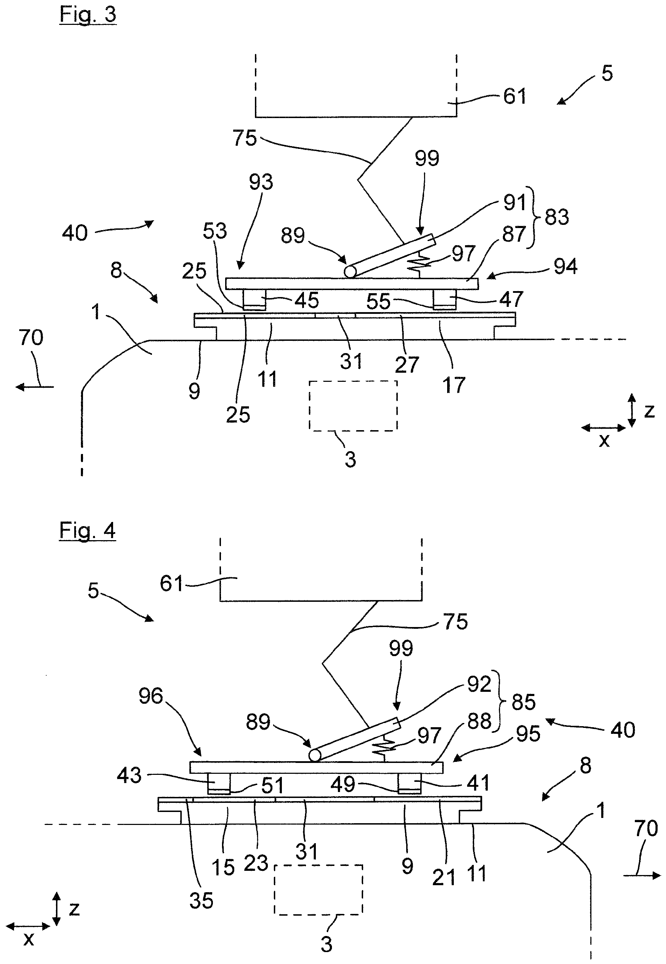

Des Weiteren sind die Gegenkontaktschienen 45, 47 hier einem ersten Gegenkontaktelement 83 (Fig. 1) der Ladestation 5 zugeordnet, während die Gegenkontaktschienen 41, 43 einem zweiten Gegenkontaktelement 85 (Fig. 2) der Ladestation 5 zugeordnet sind. Diese Gegenkontaktelemente 83, 85 können mittels einer schematisch angedeuteten Verlagerungseinrichtung 75 relativ zu einem Basiskörper 61 der Ladestation 5 in Ladestation-Hochrichtung z bzw. in Vertikalrichtung verlagert werden. Mittels der Verlagerungseinrichtung 75 kann das Gegenkontaktelement 83 dabei zwischen einer in Fig. 1 gezeigten Grundposition bzw. oberen Höhenposition und einer in Fig. 3 gezeigten unteren Höhenposition relativ zu einem Basiskörper 61 der Ladestation 5 in Ladestation-Hochrichtung verlagert werden. Zudem kann mittels der Verlagerungseinrichtung 75 das Gegenkontaktelement 85 dabei zwischen einer in Fig. 2 gezeigten Grundposition bzw. oberen Höhenposition und einer in Fig. 4 gezeigten unteren Höhenposition relativ zu einem Basiskörper 61 der Ladestation 5 in Ladestation-Hochrichtung verlagert werden.

Die Gegenkontaktelemente 83, 85 können dabei beispielsweise starr bzw. unbeweglich miteinander verbunden sein, so dass die Gegenkontaktelemente 83, 85 mittels der Verlagerungseinrichtung bzw. Höhenverstelleinrichtung 75 nur parallel zueinander bzw. gleichzeitig relativ zu dem Basiskörper 61 der Ladestation 5 in Fahrzeug-Hochrichtung z bzw. in Vertikalrichtung verlagert werden können. Alternativ können die Gegenkontaktelemente 83, 85 aber auch unabhängig voneinander mittels der Verlagerungseinrichtung 75 relativ zu dem Basiskörper 61 der Ladestation 5 verlagerbar sein, so dass die Gegenkontaktelemente 83, 85 mittels der Verlagerungseinrichtung 75 auch relativ zueinander in Vertikalrichtung verlagert werden können. Die Verlagerugnseinrichtung 75 kann beispielsweise durch wenigstens einen elektrisch betätigbaren Hebelmechanismus gebildet sein.

Jedes Gegenkontaktelement 83, 85 weist ein hier beispielhaft stabförmiges Schwenkelement 87, 88 und ein mit dem jeweiligen Schwenkelement 87, 88 über ein Schwenkgelenk 89 schwenkbar verbundenes, hier beispielhaft ebenfalls stabförmiges Stützelement 91, 92 auf. Das jeweilige Schwenkelement 87, 88 und das jeweilige Stützelement 91, 92 sind dabei derart schwenkbar miteinander verbunden, dass das Schwenkelement 87, 88 um eine in Ladestations-Querrichtung y ausgerichtete Querachse als Schwenkachse relativ zu dem jeweiligen Stützelement 91, 92 verschwenkt bzw. verdreht werden kann.

Das Schwenkgelenk 89 des jeweiligen Gegenkontaktelements 83, 85 ist hier zudem an einem, in Ladestation-Längsrichtung x gesehen, mittleren bzw. zentralen Bereich des jeweiligen stabförmigen Schwenkelements 87, 88 angeordnet. Zudem ist das Schwenkgelenk 89 des jeweiligen Gegenkontaktelements 83, 85 hier an einem Endbereich des jeweiligen stabförmigen Stützelements 91, 92 angeordnet.

Des Weiteren sind hier an dem Schwenkelement 87, 88 des jeweiligen Gegenkontaktelements 83, 85 die Gegenkontaktschienen des jeweiligen Gegenkontaktelements 83, 85 starr bzw. unbeweglich festgelegt. Dabei sind hier gemäß Fig. 1 an dem Schwenkelement 87 des ersten Gegenkontaktelements 83 die Gegenkontaktschienen 45, 47 festgelegt. Die hier in Ladestation-Querrichtung y ausgerichtete Gegenkontaktschiene 45 ist dabei an einem vorderen Endbereich 93 des stabförmigen Schwenkelements 87 angeordnet. Die hier ebenfalls in Ladestation-Querrichtung y ausgerichtete Gegenkontaktschiene 47 ist an einem hinteren Endbereich 94 des stabförmigen Schwenkelements 87 angeordnet. Gemäß Fig. 2 sind hier zudem an dem Schwenkelement 88 des zweiten Gegenkontaktelements 85 die Gegenkontaktschienen 41, 43 festgelegt. Die hier in Ladestation-Querrichtung ausgerichtete Gegenkontaktschiene 41 ist dabei an einem vorderen Endbereich 95 des stabförmigen Schwenkelements 88 angeordnet. Die ebenfalls in Ladestation-Querrichtung y ausgerichtete Gegenkontaktschiene 43 ist an einem hinteren Endbereich 96 des stabförmigen Schwenkelements 88 angeordnet.

Gemäß Fig. 1 und 2 ist hier weiter jedem Gegenkontaktelement 83, 85 ein in Vertikalrichtung wirkendes Federelement 97 zugeordnet. Jedes Federelement 97 ist dabei, in Vertikalrichtung gesehen, zwischen einem freien Endbereich 99 des jeweiligen stabförmigen Stützelements 91 und dem jeweiligen Schwenkelement 87, 88 angeordnet. Durch Verschwenkung des jeweiligen Schwenkelements 87, 88 in eine erste Schwenkrichtung relativ zu dem jeweiligen Stützelement 91, 92 wird das jeweilige Federelement 97 unter Aufbau einer Rückstellkraft gespannt. Durch Verschwenkung des jeweiligen Schwenkelements 87, 88 in eine zu der ersten Schwenkrichtung entgegengesetzte zweite Schwenkrichtung relativ zu dem jeweiligen Stützelement 91, 92 wird das jeweilige Federelement 97 entspannt.

In der in Fig. 1 und Fig. 2 gezeigten Grundposition des jeweiligen Gegenkontaktelements 83, 85 ist jedes stabförmige Schwenkelement 87, 88 mit einem definierten Anstellwinkel relativ zur Horizontalen und somit auch relativ zu dem Dach 9 des sich in einer Ladeposition befindlichen Fahrzeugs 1 angewinkelt. Zudem sind die Gegenkontaktelemente 83, 85 in der jeweiligen Grundposition beabstandet von dem sich in einer Ladeposition befindlichen Fahrzeug 1 oberhalb des Fahrzeugs 1 angeordnet. In dieser Nicht-Kontaktposition, in der die Kontakte des jeweiligen Gegenkontaktelements 83, 85 außer Anlage mit den zugeordneten fahrzeugseitigen Kontakten sind, sind die beiden Kontakte des jeweiligen Gegenkontaktelements 83, 85 in unterschiedlichen Höhenpositionen angeordnet.

Zum Herstellen des Kontakts zwischen den fahrzeugseitigen Kontakten 21, 23, 25, 27 und den ladestationsseitigen Kontakten 49, 51, 53, 55 werden die Gegenkontaktelemente 83, 85 der Ladestation 5 von der jeweiligen Grundposition (Fig. 1 und 2) in die jeweilige untere Höhenposition (Fig. 3 und 4) verlagert.

Bei der Verlagerung des ersten Gegenkontaktelements 83 von der in Fig. 1 gezeigten Grundposition vertikal nach unten in die in Fig. 3 gezeigte untere Höhenposition kommt dabei zunächst der Potentialausgleichs-Gegenkontakt 55 des Gegenkontaktelements 83 in Anlage mit dem fahrzeugseitigen Potentialausgleichskontakt 27. Bei weiterer Verlagerung des Gegenkontaktelements 83 nach unten wird das Schwenkelement 87 des Gegenkontaktelements 83 dann relativ zu dem Stützelement 91 unter Aufbau einer Rückstellkraft verschwenkt bzw. gedreht, bis der Leistungs-Gegenkontakt 53 in Anlage mit dem Leistungskontakt 25 des Fahrzeugs 1 kommt. Das stabförmige Schwenkelement 87 des Gegenkontaktelements 83 ist dann im Wesentlichen parallel zum Fahrzeugdach 9 ausgerichtet.

Bei einer Verlagerung des zweiten Gegenkontaktelements 85 von der in Fig. 2 gezeigten Grundposition vertikal nach unten in die in Fig. 4 gezeigte untere Höhenposition kommt zunächst der Leistungs-Gegenkontakt 49 des Gegenkontaktelements 85 in Anlage mit dem fahrzeugseitigen Leistungskontakt 21. Bei weiterer Verlagerung des Gegenkontaktelements 85 nach unten wird das Schwenkelement 88 des Gegenkontaktelements 85 unter Aufbau einer Rückstellkraft relativ zu dem Stützelement 92 verschwenkt bzw. gedreht, bis der Steuer-Gegenkontakt 51 in Anlage mit dem Steuerkontakt 23 des Fahrzeugs 1 kommt. Das stabförmige Schwenkelement 88 des Gegenkontaktelements 85 ist dann ebenfalls im Wesentlichen parallel zum Fahrzeugdach 9 ausgerichtet.

Dabei ist die Gegenkontakteinrichtung 40 der Ladestation 5 hier auch derart ausgebildet, dass der Potentialausgleichs-Gegenkontakt 55 des Gegenkontaktelements 83 stets zeitlich vor dem Leistungs-Gegenkontakt 49 des Gegenkontaktelements 85 in Anlage mit dem korrespondierenden fahrzeugseitigen Kontakt gebracht wird, und dass der Leistungs-Gegenkontakt 53 des Gegenkontaktelements 83 stets zeitlich vor dem Steuer-Gegenkontakt 51 des Gegenkontaktelements 85 in Anlage mit dem korrespondierenden fahrzeugseitigen Kontakt gebracht wird. Bei einer starren Verbindung der Gegenkontaktelemente 83, 85 kann dies beispielsweise dadurch realisiert werden, dass der Potentialausgleichs-Gegenkontakt 55 des Gegenkontaktelements 83 vertikal unterhalb des Leistungs-Gegenkontakts 49 des Gegenkontaktelements 85 und der Leistungs-Gegenkontakt 53 des Gegenkontaktelements 83 vertikal unterhalb des Steuer-Gegenkontakts 51 des Gegenkontaktelements 85 angeordnet ist, wenn sich die Gegenkontaktelemente 83, 85 in ihren Grundpositionen befinden. Bei relativ zueinander vertikal verlagerbaren Gegenkontaktelementen 83, 85 kann beispielsweise die Verlagerungseinrichtung 75 der Ladestation 5 entsprechend angesteuert werden.

Zum Lösen des Kontakts zwischen den fahrzeugseitigen Kontakten 21, 23, 25, 27 und den ladestationsseitigen Kontakten 49, 51, 53, 55 werden die Gegenkontaktelemente 83, 85 dann wieder von der jeweiligen unteren Höhenposition in die jeweilige Grundposition verlagert, wobei die Kontakte hier dann in umgekehrter Reihenfolge außer Anlage kommen.

Des Weiteren sind die Kontakte 21, 23, 25, 27 des Fahrzeugs 1 hier auch derart angeordnet und ausgebildet, dass ausgehend von einem Kontaktzustand, in dem jeder fahrzeugseitige Kontakt 21, 23, 25, 27 in Anlage mit dem korrespondierenden ladestationsseitigen Gegenkontakt 49, 51, 53, 55 ist, bei einer Bewegung des Fahrzeugs 1 vorwärts und rückwärts zunächst der fahrzeugseitige Steuerkontakt 23 außer Anlage mit dem ladestationsseitigen Steuer-Gegenkontakt 51 kommt, anschließend die fahrzeugseitigen Leistungskontakte 21, 25 außer Anlage mit den ladestationsseitigen Leistungs-Gegenkontakten 49, 53 kommen und schließlich der fahrzeugseitige Potentialausgleichskontakt 27 außer Anlage mit dem ladestationsseitigen Potentialausgleichs-Gegenkontakt 55 kommt.

Um ein derartiges Lösen der Kontakte bei einer Bewegung des Fahrzeugs 1 vorwärts bzw. in Fahrtrichtung 70 (Fig. 5) und rückwärts bzw. entgegen der Fahrtrichtung 70 zu realisieren, weist der fahrzeugseitige Steuerkontakt 23 hier, in Fahrzeug-Längsrichtung x gesehen, eine geringere Länge auf als die fahrzeugseitigen Leistungskontakte 21, 25 (siehe hierzu Fig. 5). Zudem weisen hier auch die Leistungskontakte 21, 25 des Fahrzeugs 1 eine geringere Länge auf als der fahrzeugseitige Potentialausgleichskontakt 27. Die fahrzeugseitigen Leistungskontakte 21, 25 weisen hier beispielhaft eine identische Länge auf.

Ausgehend von einer Breite G der Gegenkontakte, eines Sicherheitsabstands S und eines Schienenabstands H zwischen den vorderen Gegenkontaktschienen 41, 45 und den hinteren Gegenkontaktschienen 43, 47 als vorgegebene Parameter sind eine Länge des Potentialausgleichskontakts F, ein erster Längsabstand C zwischen den zwei Kontakten der ersten Kontaktschiene 15, ein zweiter Längsabstand D zwischen den zwei Kontakten der zweiten Kontaktschiene 17, eine Länge E des Steuerkontakts 23 des Fahrzeugs 1 und die Länge A der Leistungskontakte 21, 25 des Fahrzeugs 1 hier zudem gemäß den folgenden Formeln ausgebildet:

F=H-G; D=G+S; C=2xD; E=F-2xD; A=F-D; A=H-2xG-S

Auf diese Weise wird ausgehend von der Breite G der Gegenkontakte 49, 51, 53, 55, des Sicherheitsabstands S und des Schienenabstands H als vorgegebene Parameter zuverlässig sichergestellt, dass sich die Kontakte in der genannten Weise voneinander lösen, wenn sich das Fahrzeug 1 ausgehend von einer Ladeposition vorwärts und rückwärts bewegt. Dies wird hier für alle möglichen Ladepositionen des Fahrzeugs 1 relativ zu der Ladestation 5 gewährleistet, in denen der Kontaktzustand hergestellt werden kann. Der Sicherheitsabstand S ist hier dabei durch das Produkt aus einer vorgegebenen minimalen Kriechstrecke und einem individuellen Sicherheitsfaktor gebildet. Die minimale Kriechstrecke kann dabei beispielsweise gemäß den Normen DIN_EN_50124 (VDE0115-107-1) oder IEC60664 ausgeführt sein, so dass sie je nach Anwendungsfall normgerecht bemessen ist. Der Sicherheitsfaktor kann in Abhängigkeit vom Anwendungsfall gewählt werden und kann beispielsweise in einem Bereich von 1 bis 10, insbesondere in einem Bereich von 1 bis 3, liegen.

### Bezugszeichenliste

- 1: Fahrzeug
- 3: elektrischer Energiespeicher
- 5: Ladestation
- 8: Kontakteinrichtung
- 9: Dach
- 11: Kontaktelement
- 15: Kontaktschiene
- 17: Kontaktschiene
- 19: Verbindungselement
- 21: erster Leistungskontakt
- 23: Steuerkontakt
- 25: zweiter Leistungskontakt
- 27: Potentialausgleichskontakt
- 29: Trägerkörper
- 31: elektrisches Isolationselement
- 33: hintere Stirnwand
- 35: elektrisches Isolationselement
- 37: obere Wand
- 39: obere Wand
- 40: Gegenkontakteinrichtung
- 41: Gegenkontaktschiene
- 43: Gegenkontaktschiene
- 45: Gegenkontaktschiene
- 47: Gegenkontaktschiene
- 49: erster Leistungs-Gegenkontakt
- 51: Steuer-Gegenkontakt
- 53: zweiter Leistungs-Gegenkontakt
- 55: Potentialausgleichs-Gegenkontakt
- 57: Trägerkörper
- 61: Basiskörper
- 70: Fahrtrichtung
- 75: Verlagerungseinrichtung
- 83: Gegenkontaktelement
- 85: Gegenkontaktelement
- 87: Schwenkelement
- 88: Schwenkelement
- 89: Schwenkgelenk
- 91: Stützelement
- 93: Endbereich
- 94: Endbereich
- 95: Endbereich
- 96: Endbereich
- 97: Federelement
- 99: freier Endbereich

## Patentansprüche

1. Vorrichtung zum Aufladen eines elektrischen Energiespeichers eines einen elektrischen Antrieb aufweisenden Fahrzeugs, mit einer dem Fahrzeug (1) zugeordneten elektrischen Kontakteinrichtung (8), die einen, einen ersten Pol bildenden ersten Leistungskontakt (21), einen, einen zweiten Pol bildenden zweiten Leistungskontakt (25), einen Steuerkontakt (23) und einen Potentialausgleichskontakt (27) aufweist, und mit einer, einer Ladestation zugeordneten Gegenkontakteinrichtung, die zu den fahrzeugseitigen Kontakten korrespondierende Gegenkontakte aufweist,
wobei die Ladestation (5) zwei Gegenkontaktelemente (83, 85) mit jeweils zwei ladestationsseitigen Gegenkontakten (49, 51, 53, 55) aufweist,
wobei ein ladestationsseitiger Potentialausgleichs-Gegenkontakt (55) und ein ladestationsseitiger Leistungs-Gegenkontakt (53) dem ersten Gegenkontaktelement (83) und ein ladestationsseitiger Leitungs-Gegenkontakt (49) und ein ladestationsseitiger Steuer-Gegenkontakt (51) dem zweiten Gegenkontaktelement (85) zugeordnet sind,
wobei jedes Gegenkontaktelement (83, 85) der Ladestation (5) ein Schwenkelement (87, 88) und ein mit dem Schwenkelement (87, 88) über ein Schwenkgelenk (89) schwenkbar verbundenes Stützelement (91, 92) aufweist, wobei die zwei ladestationsseitigen Gegenkontakte (49, 51, 53, 55) des jeweiligen Gegenkontaktelements (83, 85) dem Schwenkelement (87, 88) des jeweiligen Gegenkontaktelements (83, 85) zugeordnet sind,
wobei diese Gegenkontaktelemente (83, 85) zum Herstellen des Kontakts zwischen den Kontakten (21, 23, 25, 27) des sich in der Ladeposition befindlichen Fahrzeugs (1) und den ladestationsseitigen Gegenkontakten (49, 51, 53, 55) mittels einer ladestationsseitigen Verlagerungseinrichtung (71) in Vertikalrichtung in Richtung der fahrzeugseitigen Kontakte (21, 23, 25, 27) verlagerbar sind,
wobei die fahrzeugseitige Kontakteinrichtung (8) und die ladestationsseitige Gegenkontakteinrichtung (40) derart ausgebildet sind,
dass zum Herstellen des Kontakts zwischen den fahrzeugseitigen Kontakten (21, 23, 25, 27) und den ladestationsseitigen Gegenkontakten (49, 51, 53, 55) mittels der ladestationsseitigen Verlagerungseinrichtung (71) zunächst der fahrzeugseitige Potentialausgleichskontakt (27) in Anlage mit dem ladestationsseitigen Potentialausgleichs-Gegenkontakt (55) bringbar ist, anschließend die fahrzeugseitigen Leistungskontakte (21, 25) in Anlage mit den ladestationsseitigen Leistungs-Gegenkontakten (49, 53) bringbar sind und schließlich der fahrzeugseitige Steuerkontakt (23) in Anlage mit dem ladestationsseitigen Steuer-Gegenkontakt (51) bringbar ist, und
dass zum Lösen des Kontakts zwischen den fahrzeugseitigen Kontakten (21, 23, 25, 27) und den ladestationsseitigen Gegenkontakten (49, 51, 53, 55) zunächst der fahrzeugseitige Steuerkontakt (23) außer Anlage mit dem ladestationsseitigen Steuer-Gegenkontakt (51) bringbar ist, anschließend die fahrzeugseitigen Leistungskontakte (21, 25) außer Anlage mit den ladestationsseitigen Leistungs-Gegenkontakten (49, 53) bringbar sind und schließlich der fahrzeugseitige Potentialausgleichskontakt (27) außer Anlage mit dem ladestationsseitigen Potentialausgleichs-Gegenkontakt (55) bringbar ist.

2. Vorrichtung nach Anspruch 1, **dadurch gekennzeichnet, dass** die fahrzeugseitigen Kontakte (21, 23, 25, 27) durch zwei, insbesondere in Fahrzeug-Längsrichtung ausgerichtete, Kontaktschienen (15, 17) gebildet sind, wobei bevorzugt vorgesehen ist, dass jeder Kontaktschiene (15, 17) zwei Kontakte (21, 23, 25, 27) zugeordnet sind.

3. Vorrichtung nach Anspruch 1 oder 2, **dadurch gekennzeichnet, dass** das Schwenkelement (87, 88) stabförmig ist und dass das Schwenkelement (87, 88) des jeweiligen Gegenkontaktelements (83, 85) um eine in Ladestation-Querrichtung (y) ausgerichtete Querachse als Schwenkachse relativ zu dem Stützelement (91, 92) des jeweiligen Gegenkontaktelements (83, 85) verschwenkbar und/oder verdrehbar ist.

4. Vorrichtung nach einem der vorhergehenden Ansprüche, **dadurch gekennzeichnet, dass** jedem Gegenkontaktelement (83, 85) wenigstens ein Spannelement (97), insbesondere ein Federelement, zugeordnet ist, das durch Verschwenkung des jeweiligen Schwenkelements (87, 88) in eine erste Schwenkrichtung relativ zu dem jeweiligen Stützelement (91, 92) spannbar und durch Verschwenkung des jeweiligen Schwenkelements (87, 88) in eine zweite, entgegengesetzte Schwenkrichtung relativ zu dem jeweiligen Stützelement (91, 92) entspannbar ist.

5. Vorrichtung nach einem der vorhergehenden Ansprüche, **dadurch gekennzeichnet, dass** die fahrzeugseitige Kontakteinrichtung (8) und die ladestationsseitige Gegenkontakteinrichtung (40) derart ausgebildet sind, dass bei einer Verlagerung des jeweiligen ladestationsseitigen Gegenkontaktelements (83, 85) in Richtung des Fahrzeugs (1) zunächst der erste Gegenkontakt (49, 55) des Gegenkontaktelements (83, 85) in Anlage mit dem korrespondierenden fahrzeugseitigen Kontakt (21, 27) kommt, anschließend das Gegenkontaktelement (83, 85) in die erste Schwenkrichtung relativ zu dem Stützelement (91, 92) verschwenkt wird und schließlich der zweite Gegenkontakt (51, 53) des Gegenkontaktelements (83, 85) in Anlage mit dem korrespondierenden fahrzeugseitigen Kontakt (23, 25) kommt.

6. Vorrichtung nach einem der vorhergehenden Ansprüche, **dadurch gekennzeichnet, dass** die Ladestation (5) eine Höhenverstelleinrichtung als Verlagerungseinrichtung (71) aufweist, mittels der die Gegenkontaktelemente (83, 85) relativ zu einem, insbesondere bodenseitig festgelegten, Basiskörper (61) der Ladestation (5) vertikal verlagerbar sind.

7. Vorrichtung nach einem der vorhergehenden Ansprüche, **dadurch gekennzeichnet, dass** in einem Nicht-Kontaktzustand die beiden Kontakte (49, 51, 53, 55) des jeweiligen Gegenkontaktelements (83, 85) in unterschiedlichen Höhenpositionen angeordnet sind, wobei bevorzugt vorgesehen ist, dass in einem Kontaktzustand die beiden Kontakte (49, 51, 53, 55) des jeweiligen Gegenkontaktelements (83, 85) im Wesentlichen in gleicher Höhenposition angeordnet sind.

8. Vorrichtung nach einem der vorhergehenden Ansprüche, **dadurch gekennzeichnet, dass** jeder ladestationsseitige Gegenkontakt (49, 51, 53, 55) durch einen Kontaktkörper (41, 43, 45, 47) gebildet ist, der, vorzugsweise starr bzw. unbeweglich, mit dem Schwenkelement (87, 88) des jeweiligen Gegenkontaktelements (83, 85) verbunden ist.

9. Vorrichtung nach einem der vorhergehenden Ansprüche, **dadurch gekennzeichnet, dass** das Fahrzeug (1) zwei Kontaktelemente mit jeweils zwei fahrzeugseitigen Kontakten aufweist, wobei diese Kontaktelemente zum Herstellen des Kontakts zwischen den Kontakten (21, 23, 25, 27) des sich in der Ladeposition befindlichen Fahrzeugs (1) und den ladestationsseitigen Gegenkontakten (49, 51, 53, 55) mittels einer fahrzeugseitigen Verlagerungseinrichtung, insbesondere in Vertikalrichtung, in Richtung der ladestationsseitigen Kontakte (21, 23, 25, 27) verlagerbar sind.

10. Fahrzeug, insbesondere Nutzfahrzeug, mit einer Vorrichtung nach einem der Ansprüche 1 bis 9.

11. Verfahren zum Aufladen eines elektrischen Energiespeichers eines einen elektrischen Antrieb aufweisenden Fahrzeugs, zum Betreiben einer Vorrichtung nach einem der Ansprüche 1 bis 9, wobei eine dem Fahrzeug (1) zugeordnete elektrische Kontakteinrichtung (8) vorgesehen ist, die einen, einen ersten Pol bildenden ersten Leistungskontakt (21), einen, einen zweiten Pol bildenden zweiten Leistungskontakt (25), einen Steuerkontakt (23) und einen Potentialausgleichskontakt (27) aufweist, und mit einer, einer Ladestation zugeordneten Gegenkontakteinrichtung, die zu den fahrzeugseitigen Kontakten korrespondierende Gegenkontakte aufweist,
wobei die Ladestation (5) zwei Gegenkontaktelemente (83, 85) mit jeweils zwei ladestationsseitigen Gegenkontakten (49, 51, 53, 55) aufweist,
wobei ein ladestationsseitiger Potentialausgleichs-Gegenkontakt (55) und ein ladestationsseitiger Leistungs-Gegenkontakt (53) dem ersten Gegenkontaktelement (83) und ein ladestationsseitiger Leitungs-Gegenkontakt (49) und ein ladestationsseitiger Steuer-Gegenkontakt (51) dem zweiten Gegenkontaktelement (85) zugeordnet sind,
wobei jedes Gegenkontaktelement (83, 85) der Ladestation (5) ein Schwenkelement (87, 88) und ein mit dem Schwenkelement (87, 88) über ein Schwenkgelenk (89) schwenkbar verbundenes Stützelement (91, 92) aufweist, wobei die zwei ladestationsseitigen Gegenkontakte (49, 51, 53, 55) des jeweiligen Gegenkontaktelements (83, 85) dem Schwenkelement (87, 88) des jeweiligen Gegenkontaktelements (83, 85) zugeordnet sind,
wobei diese Gegenkontaktelemente (83, 85) zum Herstellen des Kontakts zwischen den Kontakten (21, 23, 25, 27) des sich in der Ladeposition befindlichen Fahrzeugs (1) und den ladestationsseitigen Gegenkontakten (49, 51, 53, 55) mittels einer ladestationsseitigen Verlagerungseinrichtung (71) in Vertikalrichtung in Richtung der fahrzeugseitigen Kontakte (21, 23, 25, 27) verlagerbar sind,
wobei beim Herstellen eines Kontakts zwischen den fahrzeugseitigen Kontakten (21, 23, 25, 27) und zugeordneten ladestationsseitigen Gegenkontakten (49, 51, 53, 55) mittels der ladestationsseitigen Verlagerungseinrichtung (71) zunächst der fahrzeugseitige Potentialausgleichskontakt (27) in Anlage mit dem ladestationsseitigen Potentialausgleichs-Gegenkontakt (55) gebracht wird, anschließend die fahrzeugseitigen Leistungskontakte (21, 25) in Anlage mit den ladestationsseitigen Leistungs-Gegenkontakten (49, 53) gebracht werden und schließlich der fahrzeugseitige Steuerkontakt (23) in Anlage mit dem ladestationsseitigen Steuer-Gegenkontakt (51) gebracht werden, und
wobei beim Lösen eines Kontakts zwischen den fahrzeugseitigen Kontakten (21, 23, 25, 27) und zugeordneten ladestationsseitigen Gegenkontakten (49, 51, 53, 55) zunächst der fahrzeugseitige Steuerkontakt (23) außer Anlage mit dem ladestationsseitigen Steuer-Gegenkontakt (51) gebracht wird, anschließend die fahrzeugseitigen Leistungskontakte (21, 25) außer Anlage mit den ladestationsseitigen Leistungs-Gegenkontakten (49, 53) gebracht werden und schließlich der fahrzeugseitige Potentialausgleichskontakt (27) au-ßer Anlage mit dem ladestationsseitigen Potentialausgleichs-Gegenkontakt (55) gebracht wird.

## Claims

1. Device for charging an electrical energy store of a vehicle having an electrical drive, comprising an electrical contact apparatus (8) that is assigned to the vehicle (1) and has a first power contact (21) forming a first pole, a second power contact (25) forming a second pole, a control contact (23) and a potential equalization contact (27), and comprising a mating contact apparatus that is assigned to a charging station and has mating contacts corresponding to the vehicle-side contacts,
wherein the charging station (5) has two mating contact elements (83, 85) that each have two charging-station-side mating contacts (49, 51, 53, 55),
wherein a charging-station-side mating potential equalization contact (55) and a charging-station-side mating power contact (53) are assigned to the first mating contact element (83), and a charging-station-side mating power contact (49) and a charging-station-side mating control contact (51) are assigned to the second mating contact element (85),
wherein each mating contact element (83, 85) of the charging station (5) has a pivoting element (87, 88) and a support element (91, 92) that is pivotably connected to the pivoting element (87, 88) via a pivot joint (89), wherein the two charging-station-side mating contacts (49, 51, 53, 55) of the respective mating contact element (83, 85) are assigned to the pivoting element (87, 88) of the respective mating contact element (83, 85),
wherein, in order to produce the contact between the contacts (21, 23, 25, 27) of the vehicle (1) in the charging position and the charging-station-side mating contacts (49, 51, 53, 55), these mating contact elements (83, 85) are able to be displaced vertically in the direction of the vehicle-side contacts (21, 23, 25, 27) by means of a charging-station-side displacement apparatus (71),
wherein the vehicle-side contact apparatus (8) and the charging-station-side mating contact apparatus (40) are designed in such a way
that, in order to produce the contact between the vehicle-side contacts (21, 23, 25, 27) and the charging-station-side mating contacts (49, 51, 53, 55), first of all the vehicle-side potential equalization contact (27) is able to be brought into contact with the charging-station-side mating potential equalization contact (55), then the vehicle-side power contacts (21, 25) are able to be brought into contact with the charging-station-side mating power contacts (49, 53), and finally the vehicle-side control contact (23) is able to be brought into contact with the charging-station-side mating control contact (51), by means of the charging-station-side displacement apparatus (71), and
that, in order to release the contact between the vehicle-side contacts (21, 23, 25, 27) and the charging-station-side mating contacts (49, 51, 53, 55), first of all the vehicle-side control contact (23) is able to be brought out of contact with the charging-station-side mating control contact (51), then the vehicle-side power contacts (21, 25) are able to be brought out of contact with the charging-station-side mating power contacts (49, 53), and finally the vehicle-side potential equalization contact (27) is able to be brought out of contact with the charging-station-side mating potential equalization contact (55).

2. Device according to Claim 1, **characterized in that** the vehicle-side contacts (21, 23, 25, 27) are formed by two contact rails (15, 17), which in particular are oriented in the vehicle longitudinal direction, wherein provision is preferably made for two contacts (21, 23, 25, 27) to be assigned to each contact rail (15, 17).

3. Device according to Claim 1 or 2, **characterized in that** the pivoting element (87, 88) is bar-shaped, and **in that** the pivoting element (87, 88) of the respective mating contact element (83, 85) is able to be pivoted and/or rotated about a transverse axis, oriented in the charging-station transverse direction (y), as pivot axis relative to the support element (91, 92) of the respective mating contact element (83, 85).

4. Device according to one of the preceding claims, **characterized in that** each mating contact element (83, 85) is assigned at least one tensioning element (97), in particular a spring element, that is able to be tensioned by pivoting the respective pivoting element (87, 88) in a first pivoting direction relative to the respective support element (91, 92) and is able to be relieved of tension by pivoting the respective pivoting element (87, 88) in a second, opposite pivoting direction relative to the respective support element (91, 92).

5. Device according to one of the preceding claims, **characterized in that** the vehicle-side contact apparatus (8) and the charging-station-side mating contact apparatus (40) are designed in such a way that, upon the respective charging-station-side mating contact element (83, 85) being displaced in the direction of the vehicle (1), first of all the first mating contact (49, 55) of the mating contact element (83, 85) comes into contact with the corresponding vehicle-side contact (21, 27), then the mating contact element (83, 85) is pivoted in the first pivoting direction relative to the support element (91, 92), and finally the second mating contact (51, 53) of the mating contact element (83, 85) comes into contact with the corresponding vehicle-side contact (23, 25).

6. Device according to one of the preceding claims, **characterized in that** the charging station (5) has a height adjustment apparatus as displacement apparatus (71), by means of which the mating contact elements (83, 85) are able to be displaced vertically relative to a base body (61), which in particular is fastened at its base, of the charging station (5).

7. Device according to one of the preceding claims, **characterized in that** the two contacts (49, 51, 53, 55) of the respective mating contact element (83, 85) are arranged at different height positions in a non-contact state, wherein provision is preferably made for the two contacts (49, 51, 53, 55) of the respective mating contact element (83, 85) to be arranged substantially at the same height position in a contact state.

8. Device according to one of the preceding claims, **characterized in that** each charging-station-side mating contact (49, 51, 53, 55) is formed by a contact body (41, 43, 45, 47) that is connected, preferably rigidly or immovably, to the pivoting element (87, 88) of the respective mating contact element (83, 85).

9. Device according to one of the preceding claims, **characterized in that** the vehicle (1) has two contact elements that each have two vehicle-side contacts, wherein, in order to produce the contact between the contacts (21, 23, 25, 27) of the vehicle (1) in the charging position and the charging-station-side mating contacts (49, 51, 53, 55), these contact elements are able to be displaced, in particular vertically, in the direction of the charging-station-side contacts (21, 23, 25, 27) by means of a vehicle-side displacement apparatus.

10. Vehicle, in particular utility vehicle, comprising a device according to one of Claims 1 to 9.

11. Method for charging an electrical energy store of a vehicle having an electrical drive, for operating a device according to one of Claims 1 to 9, wherein an electrical contact apparatus (8) is provided that is assigned to the vehicle (1) and has a first power contact (21) forming a first pole, a second power contact (25) forming a second pole, a control contact (23) and a potential equalization contact (27), and comprising a mating contact apparatus that is assigned to a charging station and has mating contacts corresponding to the vehicle-side contacts,
wherein the charging station (5) has two mating contact elements (83, 85) that each have two charging-station-side mating contacts (49, 51, 53, 55),
wherein a charging-station-side mating potential equalization contact (55) and a charging-station-side mating power contact (53) are assigned to the first mating contact element (83), and a charging-station-side mating power contact (49) and a charging-station-side mating control contact (51) are assigned to the second mating contact element (85),
wherein each mating contact element (83, 85) of the charging station (5) has a pivoting element (87, 88) and a support element (91, 92) that is pivotably connected to the pivoting element (87, 88) via a pivot joint (89), wherein the two charging-station-side mating contacts (49, 51, 53, 55) of the respective mating contact element (83, 85) are assigned to the pivoting element (87, 88) of the respective mating contact element (83, 85),
wherein, in order to produce the contact between the contacts (21, 23, 25, 27) of the vehicle (1) in the charging position and the charging-station-side mating contacts (49, 51, 53, 55), these mating contact elements (83, 85) are able to be displaced vertically in the direction of the vehicle-side contacts (21, 23, 25, 27) by means of a charging-station-side displacement apparatus (71),
wherein, when contact between the vehicle-side contacts (21, 23, 25, 27) and assigned charging-station-side mating contacts (49, 51, 53, 55) is produced, first of all the vehicle-side potential equalization contact (27) is brought into contact with the charging-station-side mating potential equalization contact (55), then the vehicle-side power contacts (21, 25) are brought into contact with the charging-station-side mating power contacts (49, 53), and finally the vehicle-side control contact (23) is brought into contact with the charging-station-side mating control contact (51), by means of the charging-station-side displacement apparatus (71), and
wherein, when contact between the vehicle-side contacts (21, 23, 25, 27) and assigned charging-station-side mating contacts (49, 51, 53, 55) is released, first of all the vehicle-side control contact (23) is brought out of contact with the charging-station-side mating control contact (51), then the vehicle-side power contacts (21, 25) are brought out of contact with the charging-station-side mating power contacts (49, 53), and finally the vehicle-side potential equalization contact (27) is brought out of contact with the charging-station-side mating potential equalization contact (55).

## Revendications

1. Dispositif de chargement d'un accumulateur d'énergie électrique d'un véhicule présentant un entraînement électrique, comprenant un équipement de contact électrique (8) associé au véhicule (1), qui présente un premier contact de puissance (21) formant un premier pôle, un deuxième contact de puissance (25) formant un deuxième pôle, un contact de commande (23) et un contact d'équipotentialité (27), et comprenant un équipement de contact complémentaire associé à une station de chargement, qui présente des contacts complémentaires (49, 51, 53, 55) correspondant aux contacts côté véhicule,
la station de chargement (5) présentant deux éléments de contact complémentaires (83, 95) comprenant respectivement deux contacts complémentaires côté station de chargement (49, 51, 53, 55),
un contact complémentaire d'équipotentialité côté station de chargement (55) et un contact complémentaire de puissance côté station de chargement (53) étant associés au premier élément de contact complémentaire (83) et un contact complémentaire de puissance côté station de chargement (49) et un contact complémentaire de commande côté station de chargement (51) étant associés au deuxième élément de contact complémentaire (85),
chaque élément de contact complémentaire (83, 85) de la station de chargement (5) présentant un élément pivotant (87, 88) et un élément de support (91, 92) relié de manière pivotante à l'élément pivotant (87, 88) par une articulation pivotante (89), les deux contacts complémentaires côté station de chargement (49, 51, 53, 55) de l'élément de contact complémentaire (83, 85) respectif étant associés à l'élément pivotant (87, 88) de l'élément de contact complémentaire (83, 85) respectif,
ces éléments de contact complémentaires (83, 85), pour établir le contact entre les contacts (21, 23, 25, 27) du véhicule (1) se trouvant en position de chargement et les contacts complémentaires côté station de chargement (49, 51, 53, 55), pouvant être déplacés dans la direction verticale en direction des contacts côté véhicule (21, 23, 25, 27) au moyen d'un équipement de déplacement côté véhicule (71),
l'équipement de contact côté véhicule (8) et l'équipement de contact complémentaire côté station de chargement (40) étant réalisés de telle sorte que,
pour établir le contact entre les contacts côté véhicule (21, 23, 25, 27) et les contacts complémentaires côté station de chargement (49, 51, 53, 55) au moyen de l'équipement de déplacement côté véhicule (71), d'abord le contact d'équipotentialité côté véhicule (27) peut être amené en appui sur le contact complémentaire d'équipotentialité côté station de chargement (55), ensuite les contacts de puissance côté véhicule (21, 25) peuvent être amenés en appui sur les contacts complémentaires de puissance côté station de chargement (49, 53), et enfin le contact de commande côté véhicule (23) peut être amené en appui sur le contact complémentaire de commande côté station de chargement (51), et que,
pour libérer le contact entre les contacts côté véhicule (21, 23, 25, 27) et les contacts complémentaires côté station de chargement (49, 51, 53, 55), d'abord le contact de commande côté véhicule (23) peut être amené à quitter le contact complémentaire de commande côté station de chargement (51), ensuite les contacts de puissance côté véhicule (21, 25) peuvent être amenés à quitter les contacts complémentaires de puissance côté station de chargement (49, 53), et enfin le contact complémentaire d'équipotentialité côté véhicule (27) peut être amené à quitter le contact complémentaire d'équipotentialité côté station de chargement (55).

2. Dispositif selon la revendication 1, **caractérisé en ce que** les contacts côté véhicule (21, 23, 25, 27) sont formés par deux rails de contact (15, 17), notamment orientés dans la direction longitudinale du véhicule, dans lequel il est de préférence prévu que deux contacts (21, 23, 25, 27) soient associés à chaque rail de contact (15, 17).

3. Dispositif selon la revendication 1 ou 2, **caractérisé en ce que** l'élément pivotant (87, 88) est en forme de barre et **en ce que** l'élément pivotant (87, 88) de l'élément de contact complémentaire (83, 85) respectif peut pivoter et/ou tourner par rapport à l'élément de support (91, 92) de l'élément de contact complémentaire (83, 85) respectif autour d'un axe transversal orienté dans la direction transversale (y) de la station de chargement, en tant qu'axe de pivotement.

4. Dispositif selon l'une quelconque des revendications précédentes, **caractérisé en ce qu'**au moins un élément de serrage (97), notamment un élément élastique, est associé à chaque élément de contact complémentaire (83, 85), lequel peut être serré par pivotement de l'élément pivotant (87, 88) respectif dans une première direction de pivotement par rapport à l'élément de support (91, 92) respectif et peut être desserré par pivotement de l'élément pivotant (87, 88) respectif dans une deuxième direction de pivotement opposée par rapport à l'élément de support (91, 92) respectif.

5. Dispositif selon l'une quelconque des revendications précédentes, **caractérisé en ce que** l'équipement de contact côté véhicule (8) et l'équipement de contact complémentaire côté station de chargement (40) sont réalisés de telle sorte que, lors d'un déplacement de l'élément de contact complémentaire côté station de chargement (83, 85) respectif en direction du véhicule (1), d'abord le premier contact complémentaire (49, 55) de l'élément de contact complémentaire (83, 85) vient en appui sur le contact côté véhicule (21, 27) correspondant, ensuite l'élément de contact complémentaire (83, 85) est amené à pivoter dans la première direction de pivotement par rapport à l'élément de support (91, 92), et enfin le deuxième contact complémentaire (51, 53) de l'élément de contact complémentaire (83, 85) vient en appui sur le contact côté véhicule (23, 25) correspondant.

6. Dispositif selon l'une quelconque des revendications précédentes, **caractérisé en ce que** la station de chargement (5) présente un équipement de réglage en hauteur en tant qu'équipement de déplacement (71), au moyen duquel les éléments de contact complémentaires (83, 85) peuvent être déplacés verticalement par rapport à un corps de base (61) de la station de chargement (5), notamment fixé côté sol.

7. Dispositif selon l'une quelconque des revendications précédentes, **caractérisé en ce que**, dans un état d'absence de contact, les deux contacts (49, 51, 53, 55) de l'élément de contact complémentaire (83, 85) respectif sont disposés à des positions en hauteur différentes, dans lequel il est de préférence prévu que, dans un état d'absence de contact, les deux contacts (49, 51, 53, 55) de l'élément de contact complémentaire (83, 85) respectif soient disposés sensiblement à la même position en hauteur.

8. Dispositif selon l'une quelconque des revendications précédentes, **caractérisé en ce que** chaque contact complémentaire côté station de chargement (49, 51, 53, 55) est formé par un corps de contact (41, 43, 45, 47) qui est relié, de préférence de manière rigide ou immobile, à l'élément pivotant (87, 88) de l'élément de contact complémentaire (83, 85) respectif.

9. Dispositif selon l'une quelconque des revendications précédentes, **caractérisé en ce que** le véhicule (1) présente deux éléments de contact comprenant respectivement deux contacts côté véhicule, ces éléments de contact pouvant être déplacés pour établir le contact entre les contacts (21, 23, 25, 27) du véhicule (1) se trouvant en position de chargement et les contacts complémentaires côté station de chargement (49, 51, 53, 55) au moyen d'un équipement de déplacement côté véhicule, notamment dans la direction verticale, en direction des contacts côté station de chargement (21, 23, 25, 27).

10. Véhicule, notamment véhicule utilitaire, comprenant un dispositif selon l'une quelconque des revendications 1 à 9.

11. Procédé de chargement d'un accumulateur d'énergie électrique d'un véhicule présentant un entraînement électrique, pour exploiter un dispositif selon l'une quelconque des revendications 1 à 9, dans lequel il est prévu un équipement de contact électrique (8) associé au véhicule (1), qui présente un premier contact de puissance (21) formant un premier pôle, un deuxième contact de puissance (25) formant un deuxième pôle, un contact de commande (23) et un contact d'équipotentialité (27), et comprenant un équipement de contact complémentaire associé à une station de chargement, qui présente des contacts complémentaires correspondant aux contacts côté véhicule,
la station de chargement (5) présentant deux éléments de contact complémentaires (83, 85) comprenant respectivement deux contacts complémentaires côté station de chargement (49, 51, 53, 55),
un contact complémentaire d'équipotentialité côté station de chargement (55) et un contact complémentaire de puissance côté station de chargement (53) étant associés au premier élément de contact complémentaire (83) et un contact complémentaire de puissance côté station de chargement (49) et un contact complémentaire de commande côté station de chargement (51) étant associés au deuxième élément de contact complémentaire (85),
chaque élément de contact complémentaire (83, 85) de la station de chargement (5) présentant un élément pivotant (87, 88) et un élément de support (91, 92) relié de manière pivotante à l'élément pivotant (87, 88) par une articulation pivotante (89), les deux contacts complémentaires côté station de chargement (49, 51, 53, 55) de l'élément de contact complémentaire (83, 85) respectif étant associés à l'élément pivotant (87, 88) de l'élément de contact complémentaire respectif (83, 85),
ces éléments de contact complémentaires (83, 85), pour établir le contact entre les contacts (21, 23, 25, 27) du véhicule (1) se trouvant dans la position de chargement et les contacts complémentaires côté station de chargement (49, 51, 53, 55), pouvant être déplacés dans la direction verticale en direction des contacts côté véhicule (21, 23, 25, 27) au moyen d'un équipement de déplacement côté station de chargement (71),
dans lequel, lors de l'établissement d'un contact entre les contacts côté véhicule (21, 23, 25, 27) et des contacts complémentaires côté station de chargement (49, 51, 53, 55) associés au moyen de l'équipement de déplacement côté station de chargement (71), d'abord le contact complémentaire d'équipotentialité côté véhicule (27) est amené en appui sur le contact complémentaire d'équipotentialité côté station de chargement (55), ensuite les contacts de puissance côté véhicule (21, 25) sont amenés en appui sur les contacts complémentaires de puissance côté station de chargement (49, 53), et enfin le contact de commande côté véhicule (23) est amené en appui sur le contact complémentaire de commande côté station de chargement (51) et,
lors de la libération d'un contact entre les contacts côté véhicule (21, 23, 25, 27) et des contacts complémentaires côté station de chargement (49, 51, 53, 55) associés, d'abord le contact de commande côté véhicule (23) est amené à quitter le contact complémentaire de commande côté station de chargement (51), ensuite les contacts de puissance côté véhicule (21, 25) sont amenés à quitter les contacts complémentaires de puissance côté station de chargement (49, 53), et enfin le contact complémentaire d'équipotentialité côté véhicule (27) est amené à quitter le contact complémentaire d'équipotentialité côté station de chargement (55).
